# EUROPEAN PATENT APPLICATION

(11) **EP 2 733 914 A1**
(43) Date of publication of application: **21.05.2014**
(21) Application number: 12811831.2
(22) Date of filing: 20.06.2012
(51) Int. Cl.: H04M 1/725

(54) **MOBILE TERMINAL, SOFTWARE SHARING SYSTEM AND SHARING METHOD THEREOF**

(30) Priority: 11.07.2011 CN 201110193170
(71) Applicant: Huizhou TCL Mobile Communication Co., Ltd., Huizhou, Guangdong 516006 (CN)
(72) Inventor: YE, Dawei, Huizhou Guangdong 516006 (CN)
(74) Representative: Brachmann, Roland W.
(86) International application number: PCT/CN2012/077237
(87) International publication number: WO 2013/007143

(57) **Abstract**

Disclosed is a mobile terminal, including: a far-end communication module for downloading shared software from a remote server; a software management module for acquiring a software sharing request; and a near-end communication module for sending the shared software to another mobile terminal according to the software sharing request by way of near field transmission. Also provided are a software sharing system and a sharing method thereof. The present invention can realize fast sharing of software between mobile terminals.

## Description

### Technical Field

The present invention relates to the mobile terminal field, in particular, relates to a mobile terminal, a software sharing system and a sharing method thereof.

### Background Art

Digital application store is an important channel for releases of digital products. A user of a mobile terminal must perform payment to complete the transaction in a digital application store before downloading software from the digital application store. And the developer of the software and the digital application store share the revenue.

The digital application store includes App store of Apple, Android Market of Google, Market Place of Microsoft and WAC Alliance of the operators and so on, which are used for providing a sharing server to the users to download software. Generally, users of the mobile terminals have to pay the fee first in the digital application store before downloading, installing and running the software. Installing and running the software is usually conducted under the supervision of a management program provided by the digital application store; that is to say, the digital application store will control the spreading process of the software strictly, and the software in the digital application store is not allowed to be transmitted to or installed on other terminals after being downloaded. The purpose that the digital application store forbids the duplicates of software among different mobile terminals is to prevent the free transmission of the paid-for software among other various users performing no payments after the software being downloaded by a user, which can protect the software against piracy effectively. At the same time, however, this brings inconveniences to users. For example, when a user finds that there is nice software in a mobile terminal of another user and wants to buy and use it too, the user has to get on line and purchase the software from the digital application store to download and use the software. While currently the data sizes of software become bigger and bigger, especially some game software can have a data size of dozens of megabytes. Using a data communication network provided by the operator to download the software with a big data size will take a large amount of network traffic and cost a lot, and so the users will like to download the software only when there is a wifi connection available. When a user is in the outside, where there is only a data communication network available, the downloading speed is slow and the cost for data traffic is high, especially in abroad, the roaming charge is much more expensive. Moreover, in some countries and regions, the internet construction is still relatively backward, so it is more difficult for the users in these countries and regions to download software through a data communication network.

Therefore, how to achieve fast sharing of software between mobile terminals becomes an issue which needs to be solved urgently.

### Summary of the Invention

The present invention mainly solves the technical problem that software cannot be shared and used quickly between mobile terminals, provides a mobile terminal, a software sharing system and a sharing method thereof, which can achieve the fast sharing of software between mobile terminals.

A technical solution employed in the present invention to solve above mentioned technical problem is: providing a software sharing method, which comprises the steps of: downloading shared software from a remote server; acquiring a software sharing request; communicating with the remote server to pay the required fee for transmitting the shared software, and acquire a software transmitting authorization for the shared software issued by the remote server after the remote server confirms the receipt of the fee; sending the shared software to an external device according to the software sharing request and the software transmitting authorization by way of short range transmission.

As an improvement of the method described above, the method further comprises the steps of: demonstrating to-be-shared software to a user; acquiring the software sharing request generated after the user chooses the shared software from the to-be-shared software.

Another technical solution employed in the present invention to solve above mentioned technical problem is: providing a mobile terminal, which comprises: a far-end communication module for downloading shared software from a remote server; a software management module for acquiring a software sharing request; a near-end communication module for sending the shared software to another mobile terminal according to the software sharing request by way of short range transmission.

As an improvement for the mobile terminal described above, upon the acquirement of the software sharing request, the software management module further commands the far-end communication module to acquire a software transmitting authorization from the remote server, and commands the near-end communication module to send the shared software according to the software sharing request and the software transmitting authorization by way of short range transmission.

As an improvement of the mobile terminal described above, the software management module utilizes the far-end communication module to communicate with the remote server so as to pay the fee for transmitting the shared software, and the remote server issues the software transmitting authorization to the far-end communication module after confirming the receipt of the fee.

As an improvement of above-described mobile terminal, the mobile terminal further comprises a user interface module, which demonstrates to-be-shared software for a user, the user chooses the shared software from the to-be-shared software via the user interface module to generate the software sharing request.

As a further improvement of the above-described mobile terminal, the near-end communication module acquires the software sharing request from said another mobile terminal.

Another technical solution employed in the present invention to solve above-described technical problem is: providing a software sharing system, which comprises: a remote server on which a plurality of shared software are set for users to download; a first mobile terminal comprising a first far-end communication module, a first near-end communication module and a first software management module; a second mobile terminal comprising a second far-end communication module, a second near-end communication module and a second software management module; wherein, the first far-end communication module downloads the shared software from the remote server, the first near-end communication module acquires a software sharing request, the first software management module commands the first near-end communication to send the shared software to the second near-end communication module according to the software sharing request by way of short range transmission.

As an improvement of the software sharing system described above, when the software sharing request is obtained, the first software management module further commands the first far-end communication module to acquire a software transmitting authorization from the remote server, and commands the first near-end communication to send the shared software to the second near-end communication module by way of short range transmission according to the software sharing request and the software transmitting authorization. Wherein, the first software management module utilizes the first far-end communication module to communicate with the remote server so as to pay the fee for transmitting the shared software, the remote server issues the software transmitting authorization to the first far-end communication module after confirming the receipt of the fee.

As an improvement of the software sharing system described above, upon acquiring the software sharing request, the first software management module further commands the first near-end communication module to acquire software transmission confirming information from the second near-end communication module and commands the first near-end communication to send the shared software to the second near-end communication module by way of short range transmission according to the software sharing request and the software transmission confirming information. Wherein, the second software management module utilizes the second far-end communication module to communicate with the remote server so as to pay the fee for transmitting the shared software, the remote server provides the software transmitting authorization to the second far-end communication module after confirming the receipt of the fee, the second software management module generates the software transmission confirming information based on the software transmitting authorization.

The beneficial effects of the present invention are: different from the existing art, the present invention downloads shared software from a server through a far-end communication module, and acquires a software sharing request via a software management module and finally sends the shared software to another mobile terminal through a near-end communication module by way of short range transmission. The mobile terminal of the present invention can achieve software transmission in a short distance, especially for the paid-for software, can reduce the downloading procedures of high traffic from the server and lower the high traffic cost.

### Description of the drawings

- Figure 1: is a schematic diagram showing the function modules of a software sharing system according to the present invention;
- Figure 2: is a schematic diagram showing the function modules in a preferred embodiment for a mobile terminal of the software sharing system shown in Figure 1;
- Figure 3: is a schematic diagram showing the working principle of the software sharing system shown in Figure 1; and
- Figure 4: is a schematic diagram showing the working process of a software sharing method of the software sharing system shown in Figure 1.

### Detailed Description of Embodiments

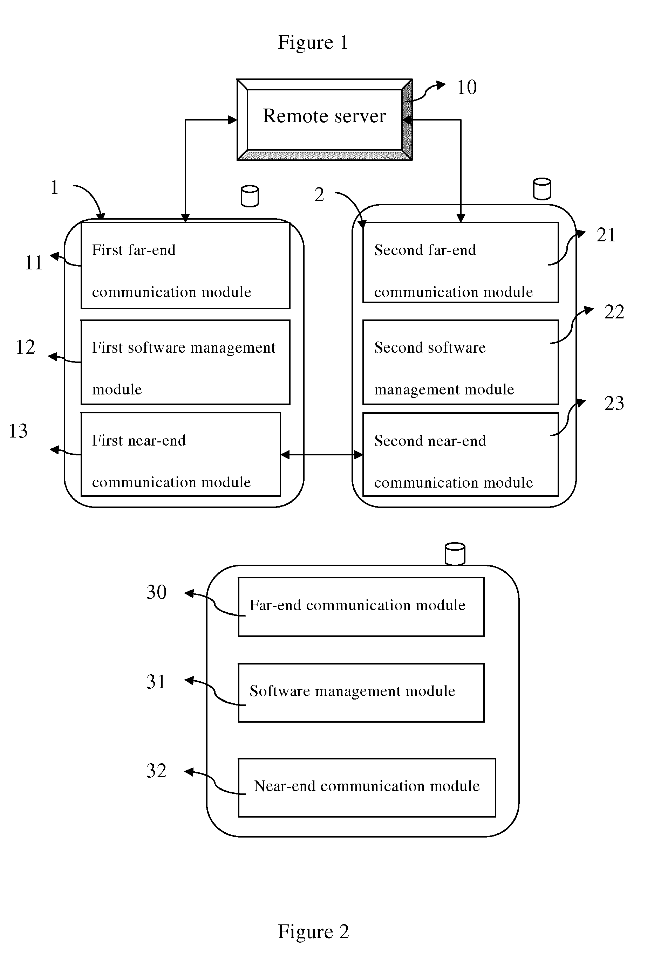

Referring to Figure 1, which is a schematic diagram showing the function modules of a software sharing system according to the present invention.

In the first embodiment of the present invention, the software sharing system comprises:
- a remote server 10, on which a plurality of shared software are set for users to download;
- a first mobile terminal 1 comprising a first far-end communication module 11, a first near-end communication module 13 and a first software management module 12;
- a second mobile terminal 2 comprising a second far-end communication module 21, a second near-end communication module 23 and a second software management module 22;
- wherein, the first far-end communication module 11 downloads the shared software from the remote server 10, the first near-end communication module 13 acquires a software sharing request, the first software management module 12 commands the first near-end communication module 13 to send the shared software to the second near-end communication module 23 according to the software sharing request by way of short range transmission.

In a preferable embodiment of the present invention, the first mobile terminal 1 can provide a first user interface module (not shown in the Figure) to demonstrate to-be-shared software for a user, the user chooses the shared software from the to-be-shared software via the first user interface module to generate the software sharing request. Wherein, the first user interface module can be implemented by a display screen, a keyboard or a touch screen of a mobile terminal, and by the corresponding control code which can indicate the information of the to-be-shared software on a display screen and choose the shared software according to the input of the user on a keyboard or a touch screen.

Certainly, in addition to using the above mentioned method to acquire a software sharing request, in other embodiments of the present invention, the software sharing request can also be acquired by the first near-end communication module 13 from the second near-end communication module 23.

Therefore, after the first mobile terminal 1 obtains the shared software from the remote server 10, the shared software can be transmitted to the second mobile terminal 2 according to the acquired software sharing request by way of short range transmission, and a fast transmission of software between mobile terminals can be achieved.

However, there might be a problem existing in the above mentioned embodiment, that is if the shared software is not a free open source one, then infringement on the developers of the software may be caused, therefore, in another embodiment described below of the present invention, an authentication mechanism is added into the above described embodiment to ensure that the non-open source software will not be transmitted illegally.

In another embodiment of the present invention, when the first software management module 12 acquires a software sharing request, it can further command the first far-end module 11 to acquire a software transmitting authorization from the remote server 10 and make the first near-end communication module 13 send the shared software to the second near-end communication module 23 according to the software sharing request and the software transmitting authorization by way of short range transmission. As previously mentioned, a user can trigger a software sharing request via the ways such as an interface, also can use the second mobile terminal 2 to initiate the software sharing request to the first mobile terminal.

In the embodiment, the method for acquiring a software transmitting authorization includes:
Approach 1, on the acquirement of the software sharing request, the first software management module 12 further commands the first near-end communication module 13 to acquire a software transmission confirming information from the second near-end communication module 23 and commands the first near-end communication module 13 to send the shared software to the second near-end communication module 23 by way of short range transmission according to the software sharing request and the software transmission confirming information. Wherein, the generation of the software transmission confirming information is as follows: the second software management module 22 utilizes the second far-end communication module 21 to communicate with the remote server 10 so as to pay the fee for spreading the shared software, the remote server 10 issues the software transmitting authorization to the second far-end communication module 21 after confirming the receipt of the fee, the second software management module generates the software transmission confirming information based on the software transmitting authorization;
Approach 2, on the acquirement of the software sharing request, the first software management module 12 further has the first far-end communication module 11 acquire a software spreading authorization from the remote server 10, and commands the first near-end communication module 13 to send the shared software to the second near-end communication module 23 by way of short range transmission according to the software sharing request and the software transmitting authorization. Wherein, the first software management module 12 utilizes the first far-end communication module 11 to communicate with the remote server 10 so as to pay the fee for spreading the shared software, the remote server 10 issues the software transmitting authorization to the first far-end communication module 11 after confirming the receipt of the fee.

Referring to Figure 2, which is a schematic diagram showing the function modules in a preferable embodiment of a mobile terminal for the software sharing system shown in Figure 1;

In the second embodiment of the present invention, the mobile terminal comprises:
- a far-end communication module 30 for downloading shared software from the remote server 10, and in the present invention, the remote server refers to a digital application store, such as App store of Apple, Android Market of Google, Market Place of Microsoft and WAC Alliance of the operators, which is a shared server used for providing software for users to download;
- a software management module 31 for downloading, installing and running the software remotely, in the embodiment, the software management module is used for acquiring a software sharing request;
- a near-end communication module 32 for the connection and transmission between mobile terminals, in the present invention, the near-end communication module 32 sends the shared software to another mobile terminal according to the software sharing request by way of short distance transmission.

In the embodiment, the far-end communication module 30 provides a far-end communication API (Application Program Interface), the far-end communication API is used for establishing a connection to the remote server 10.

In the embodiment, the software management module 31 is realized in a way of program function, that is it exists in the mobile terminal in a way of program function. Generally the thread management mechanism of the software management module 31 is provided and built by the mobile terminal system to achieve the switches between threads, for example the function Thread_Resume () is to resume the execution of a thread, and the function Thread_Suspend () is to suspend the execution of a thread. The software management module 31 can call the APIs of the mobile terminal system to execute various communication operations, such as Bluetooth API (near-end communication) and GPRS API (Global Positioning System Application Program Interface, far-end communication).

In the embodiment, the near-end communication module 32 can be implemented with Bluetooth chips, near field communication chips or USB transmission control chips. The near field communication (NFC), also called short range wireless communication, is a high frequency wireless communication technology of short distance, allowing contactless point-to-point data transmission and data exchanges within 10 cm (3.9 inches) between electronic devices. NFC technology traces its roots back to contactless radio-frequency identification, the near field communication has two read modes, active read mode and passive read mode. Through the near field communication technology, the present invention can achieve the connection and transmission of software having big data size between mobile terminals. In addition, the mobile terminal of the present invention can connect to a computer, a PDA (personal digital assistant) and a handfree receiver via Bluetooth. Certainly, besides the above mentioned two connection methods, the present invention can also include other short range connection communications of radio-frequency.

In the embodiment, on the acquirement of the software sharing request, the software management module 31 further commands the far-end communication module 30 to acquire a software transmitting authorization from the remote server 10, and has the near-end communication module 32 send the shared software by way of short range transmission according to the software sharing request and the software transmitting authorization.

In the embodiment, the software management module 31 utilizes the far-end communication module 30 to communicate with the remote server 10 so as to pay the fee for spreading the shared software, the remote server 10 provides a software transmitting authorization to the far-end communication module 30 after confirming the receipt of the fee. Wherein, the mobile terminal can perform payment directly via the far-end communication module 30 to acquire the software transmitting authorization, also the software spreading authorization can be acquired by the near-end communication module 32 from another mobile terminal.

In the embodiment, the mobile terminal further comprises a user interface module (not shown in the Figure), the user interface module demonstrates to-be-shared software for a user, and the user chooses the shared software from the to-be-shared software via the user interface module to generate a sharing request of the software. As mentioned previously, the mobile terminal can acquire the software sharing request from another mobile terminal through the near-end communication module 32.

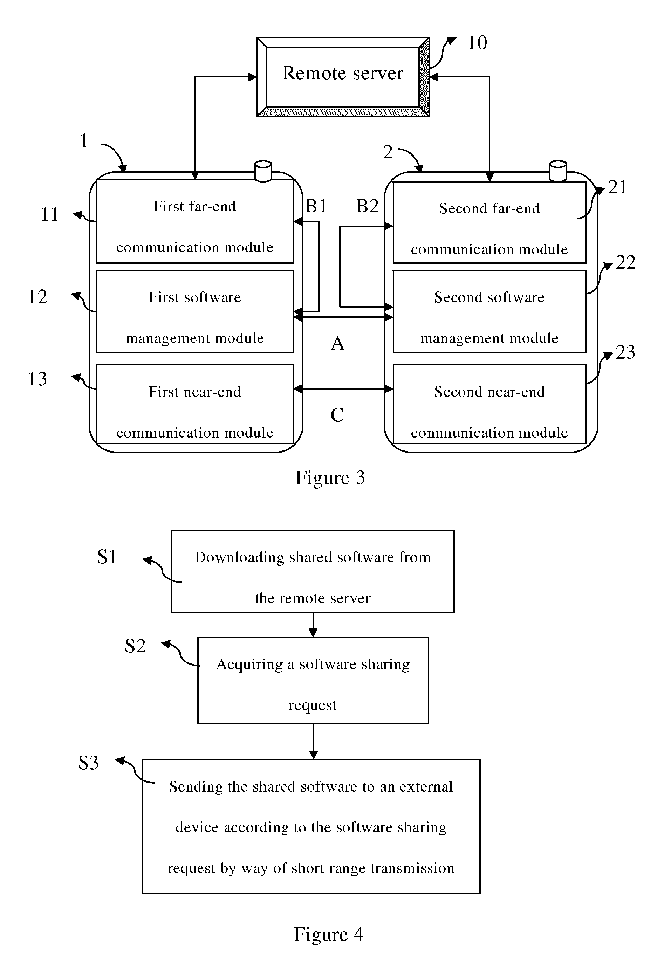

Referring to Figure 3 and Figure 4, Figure 3 is a schematic diagram showing the working principle of the software sharing system shown in Figure 1. Figure 4 is a schematic diagram showing the working process of a software sharing method for the software sharing system shown in Figure 1.

The working principle of the software sharing system comprises:
- procedure A, the first software management module 12 and the second software management module 22 build a connection between each other and perform the negotiation about the software transmission confirming information, for example, which mobile terminal should be chosen to pay the cost for the shared software;
- procedure B1, if it is the first mobile terminal 1 that should pay the cost, then the first software management module 12 notifies the first far-end communication module 11 to connect with the remote server 10 to perform the payment;
- procedure B2, if it is the second mobile terminal 2 that should pay the fee, then the second software management module 22 notifies the second far-end communication module 21 to connect with the remote server 10 to perform the payment;
- procedure C, the first near-end communication module 13 and the second near-end communication module 23 perform the software sharing by the building of communication link between them.

The above implemented procedures of the working principle are only for the brief description of the software sharing system of the present invention, the specific implement procedure can include various ways, and the present invention does not limit the detailed process.

Further referring to Figure 4, which is a schematic diagram showing the working process of a software sharing method of the software sharing system shown in Figure 1, wherein, the software sharing method comprises the steps of:
Step S1: downloading shared software from a remote server;
Step S2: acquiring a software sharing request;
Step S3: sending the shared software to an external device by way of short range transmission according to the software sharing request.

In a preferred embodiment, the Step S2 can further comprise: after the software sharing request is acquired, obtaining a software transmitting authorization according to the software sharing request, the step S3 can further comprise: sending the shared software to an external device by way of short range transmission according to the software sharing request and the software transmitting authorization.

Wherein, preferably the external device is another mobile terminal.

In the embodiment, the far-end communication module of the mobile terminal downloads the shared software from the remote server, and the software includes free sharing software and paid-for sharing software.

In the embodiment, the software sharing request can be triggered by the user interface module of the mobile terminal, and it can also be initiated by the external device initiatively to the mobile terminal.

In the embodiment, a software transmitting authorization should be acquired for the shared software from the remote server, and the software transmitting authorization can be acquired from the remote server by performing the payment via the far-end communication module of the mobile terminal or be acquired by the software transmission confirming information provided by the external device.

It should be noted that in all embodiments of the present invention, the short range transmission includes but is not limited to: Near Field Communication, Bluetooth, USB or Wireless Local Area Network (WLAN).

The mobile terminal, the software sharing system and the sharing method thereof of the present invention download the shared software from a remote server through a far-end communication module, and send the shared software to the mobile terminal of the demander by way of short range transmission. The present invention achieves fast sharing of the shared software, reduces the data traffic for downloading the software from the remote server and the high cost.

Described above is only the embodiments of the present invention, rather than limit the scope of the present invention, all the equivalent structure or process changes made according to the accompanied drawings and description of the present invention, or direct or indirect application in other relative technical fields, should fall into the protection scope of the present invention.

## Claims

1. A software sharing method, wherein it comprises steps of:
- downloading shared software from a remote server;
- acquiring a software sharing request;
- communicating with the remote server to pay a required fee for transmitting the shared software, and to acquire a software transmitting authorization issued by the remote server after the remote server confirms the receipt of the fee;
- sending the shared software to an external device according to the software sharing request and the software transmitting authorization by way of short range transmission.

2. The method according to claim 1, wherein, it further comprises steps of:
- demonstrating to-be-shared software to a user;
- acquiring the software sharing request generated after the user chooses the shared software from the to-be-shared software.

3. A mobile terminal, wherein, it comprises:
- a far-end communication module for downloading shared software from a remote server;
- a software management module for acquiring a software sharing request;
- a near-end communication module for sending the shared software to another mobile terminal according to the software sharing request by way of short range transmission.

4. The mobile terminal according to claim 3, wherein, when acquiring the software sharing request, the software management module further commands the far-end communication module to acquire a software transmitting authorization from the remote server, and commands the near-end communication module to send the shared software by way of short range transmission according to the software sharing request and the software transmitting authorization.

5. The mobile terminal according to claim 4, wherein, the software management module communicates with the remote server by utilizing the far-end communication module so as to pay a required fee for transmitting the shared software, the remote server issues the software transmitting authorization to the far-end communication module after confirming the receipt of the fee.

6. The mobile terminal according to claim 3, wherein, the mobile terminal further comprises a user interface module, the user interface module demonstrates to-be-shared software to a user, and the user chooses the shared software from the to-be-shared software via the user interface module to generate the software sharing request.

7. The mobile terminal according to claim 3, wherein, the near-end communication module acquires the software sharing request from said another mobile terminal.

8. A software sharing system, wherein it comprises:
- a remote server on which a plurality of software are arranged for the users to download;
- a first mobile terminal comprising a first far-end communication module, a first near-end communication module and a first software management module;
- a second mobile terminal comprising a second far-end communication module, a second near-end communication module and a second software management module;
- wherein, the first far-end communication module downloads the shared software from the remote server, the first near-end communication module acquires a software sharing request, the first software management module commands the first near-end communication to send the shared software to the second near-end communication module by way of short range transmission according to the software sharing request.

9. The software sharing system according to claim 8, wherein, when acquiring the software sharing request, the first software management module further commands the first far-end communication module to acquire a software transmitting authorization from the remote server, and commands the first near-end communication module to send the shared software to the second near-end communication module by way of short range transmission according to the software sharing request and the software transmitting authorization, wherein, the first software management module communicates with the remote server by utilizing the first far-end communication module so as to pay a required fee for transmitting the shared software, the remote server issues the software transmitting authorization to the first far-end communication module after confirming the receipt of the fee.

10. The software sharing system according to claim 9, wherein, when acquiring the software sharing request, the first software management module further commands the first near-end communication module acquire a software transmission confirming information from the second near-end communication module and commands the first near-end communication module send the shared software to the second near-end communication module by way of short range transmission according to the software sharing request and the software transmission confirming information, wherein, the second software management module communicates with the remote server by utilizing the second far-end communication module so as to pay a required fee for transmitting the shared software, the remote server issues the software transmitting authorization to the second far-end communication module after confirming the receipt of the fee, and the second software management module generates the software transmission confirming information based on the software transmitting authorization.
